# EUROPÄISCHE PATENTSCHRIFT

(11) **EP 0 875 360 B1**
(45) Veröffentlichungstag und Bekanntmachung des Hinweises auf die Patenterteilung: **20.08.2003**
(21) Anmeldenummer: 98107593.0
(22) Anmeldetag: 27.04.1998
(51) Int. Cl.: B29C 59/16, B29C 59/00

(54) **Verfahren zur Aufrauhung von Kunststoffoberflächen**
Method for roughening plastic surfaces
Procédé pour rendre des surfaces en matière plastique rugueuses

(30) Priorität: 29.04.1997 DE 19718177
(43) Veröffentlichungstag der Anmeldung: 04.11.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: Horn, Herbert, Dipl.-Ing., 52068 Aachen (DE); Pochner, Klaus, Dipl.-Phys., 52072 Aachen (DE); Beil, Sebastian, Dipl.-Phys., 52070 Aachen (DE)

(56) Entgegenhaltungen:
- EP-A- 0 658 437
- EP-A- 0 731 490
- EP-A- 0 732 624
- US-A- 4 407 695
- US-A- 4 451 534
- US-A- 4 664 748
- US-A- 5 417 896
- US-A- 5 466 627
- PATENT ABSTRACTS OF JAPAN vol. 1995, no. 07, 31. August 1995 (1995-08-31) & JP 07 104103 A (NITTO DENKO CORP), 21. April 1995 (1995-04-21)
- BECKER E W ET AL: "FABRICATION OF MICROSTRUCTURES WITH HIGH ASPECT RATIOS AND GREAT STRUCTURAL HEIGHTS BY SYNCHROTRON RADIATION LITHOGRAPHY, GALVANOFORMING, AND PLASTIC MOULDING (LIGA PROCESS)" MICROELECTRONIC ENGINEERING,NL,ELSEVIER PUBLISHERS BV., AMSTERDAM, Bd. 4, Nr. 1, 1. Mai 1986 (1986-05-01), Seiten 35-56, XP000051563 ISSN: 0167-9317

## Beschreibung

### Technisches Gebiet

Die Erfindung betrifft ein Verfahren zur Aufrauhung von Kunststoffoberflächen nach dem Oberbegriff des Anspruchs 1. Bevorzugtes Anwendungsgebiet ist die Metallisierung von Kunststoffen, bei der eine Aufrauhung der Oberfläche im Mikrometerbereich erforderlich ist.

### Stand der Technik

Bei der Metallisierung von Kunststoffen wird meist die Oberfläche des Werkstücks aufgerauht, um durch Verklammerung der aufgebrachten Metallschicht in den Vertiefungen des Kunststoffes eine Aufrauhung des Kunststoffes zu erzielen. Nach dem Stand der Technik sind hierzu verschiedene Techniken bekannt. Diese beruhen zumeist auf dem Prinzip, durch das Ausnutzen einer bereits vorhandenen Inhomogenität im Werkstoff Oberflächenbereiche partiell abzutragen.

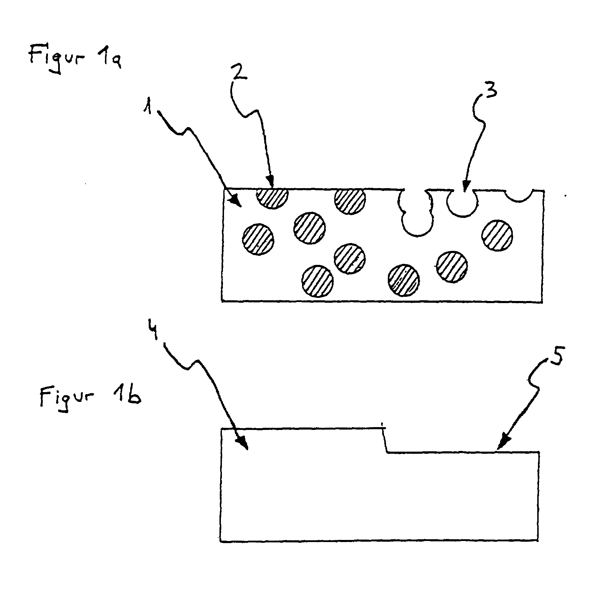

Die Inhomogenität kann chemischer Natur sein wie beim Acryl-Butadien-Styrol (ABS), einem Zweiphasenpolymer, bei welchem eine Komponente, die Butadienkomponente, selektiv entfernt werden kann. Das Entfernen der Butadienkomponente kann durch naßchemisches Ätzen in einem warmen Chromschwefelsäurebad, durch Niederdruck-Plasmaätzen oder durch abtragende Laserbehandlung erfolgen. Durch die selektive Entfernung der Butadienkomponente werden Teile der Oberfläche entfernt, und der primär aus der Styrol-Acrylnitrilkomponente bestehende Rest der Oberfläche weist die wunschgemäßen Unebenheit bzw. Rauhigkeit auf. Dies wird in **Fig. 1a** dargestellt, in der (1) die Styrol-Acrylnitrilkomponente und (2) die Butadienkomponente von ABS sind, wobei es durch das selektive Entfernen der Butadienkomponente zu kavernenartigen Vertiefungen (3) kommt.

Als weitere Inhomogenität können unterschiedliche atomare Strukturen im aufzurauhenden Werkstoff ausgenutzt werden. So kann der Werkstoff kristalline und amorphe Phasen aufweisen, die bei Ätzprozessen ein unterschiedliches Lösungsverhalten zeigen. Die unterschiedliche Löslichkeit der Phasen stellt eine unterschiedliche Antwort des Werkstoffs bei chemischer Behandlung mit Lösungsmitteln dar. Auch Füllstoffe oder Eigenspannungen können ausgenutzt werden. Zusammenfassend kann festgestellt werden, dass die Inhomogenitäten zu unterschiedlichen Antworten des Werkstoffes bei chemischer, physikalischer oder sonstiger Behandlung führen, welche für einen partiellen Abtrag der Oberfläche ausgenutzt werden.

Die genannten Verfahren nach dem Stand der Technik versagen hingegen bei homogenen Werkstoffen, bei denen eine Aufrauhung wegen des oben dargestellten Funktionsprinzips nicht möglich ist. Bei diesen Stoffen fehlt es an einer bereits vorhandenen Inhomogenität des Werkstoffs, so dass dieser an der Oberfläche nicht oder nur in unzureichendem Maße eine unterschiedliche Antwort auf chemische, physikalische oder sonstige Behandlung zeigt. Beispiele für nach dem Stand der Technik nicht aufrauhbare, aber industriell wichtige Kunststoffe sind Polyvinylchlorid, Polyvinylacetat oder Polyurethan. **Fig. 1b** zeigt das Bearbeitungsergebnis beim Ätzen eines homogenen Polymers (4) nach dem Stand der Technik. Die geätzte Fläche (5) bleibt glatt.

Die EP 0 731 490 A2 offenbart ein gattungsgemäßes Verfahren, beim dem zur Bereitstellung einer dreidimensionalen Feinstruktur im Wege eines Fotolithografieprozesses feste Partikel auf ein Substrat aufgebracht werden, welches nachfolgend strahlungsbeaufschlagt wird. Ferner offenbart die EP 0 732 624 A2 ein Verfahren und eine Vorrichtung zur Bereitstellung einer dreidimensionalen Ultrafeinstruktur, bei der eine Maske strahlungsbeaufschlagt wird. Vorgesehen wird dabei eine massiv ausgeführte Maske, die unter anderem auch schräg zur Oberflächennormalen strahlungsbeaufschlagt wird.

### Darstellung der Erfindung

Der Erfindung liegt die Aufgabe zugrunde, ein alternatives Verfahren zur Aufrauhung von Kunststoffoberflächen zu schaffen, welches die genannten Nachteile vermeidet und insbesondere die Aufrauhung von homogenen Werkstoffen ermöglicht, wobei die Aufrauhung vorzugsweise im Mikrometerbereich erfolgt.

Weiterhin ist es Aufgabe der Erfindung, ein alternatives Verfahren der genannten Art vorzuschlagen, bei dem die Parameter der erzielten Aufrauhung, wie zum Beispiel die Form, die Tiefe und der Grad der Aufrauhung, vom zu behandelnden Werkstoff unabhängig sind und dass die Oberfläche des Kunststoffs nur an bestimmten Stellen, d.h. ortsselektiv, aufgerauht werden kann.

Diese Aufgaben werden erfindungsgemäß durch die in Anspruch 1 gegebenen Merkmale gelöst. Vorteilhafte Ausgestaltungen für die Durchführung des Verfahrens sind in den Unteransprüchen 2 - 10 gegeben.

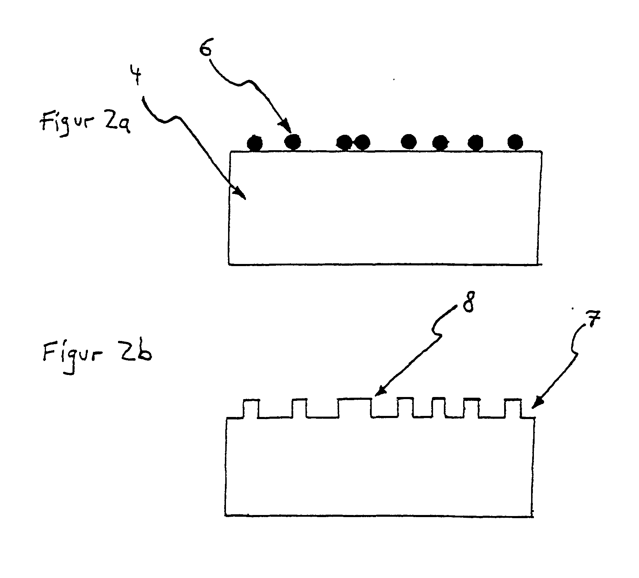

Erfindungsgemäß wird die Aufrauhung von Kunststoffoberflächen dadurch erzielt, dass auf die aufzurauhende Oberfläche Partikel derart aufgebracht werden, dass zwischen Partikeln freie Zwischenräume entstehen, dass die aufzurauhende Oberfläche in nicht von Partikeln abgedeckten Bereichen mit elektromagnetischer Strahlung beaufschlagt wird, und dass die Oberfläche in den mit elektromagnetischer Strahlung beaufschlagten Bereichen partiell abgetragen wird, bei dem die Partikel in gelöster Form auf die Oberfläche aufgebracht werden, dass durch das Verdampfen des Lösungsmittels Partikel auf der Oberfläche auskristallisieren, und sich in der Lösung mindestens eine weitere Substanz befindet, wobei die beaufschlagende elektromagnetische Strahlung von dieser unterschiedlich stark absorbiert wird. Die Partikel, vorzugsweise nichttransparente Partikel, bilden in diesem Sinne auf der aufzurauhenden Oberfläche eine unregelmäßig geformte, feingliedrige Struktur, die als Belichtungsmaske für einfallende elektromagnetische Strahlung dient. Dies zeigt **Fig. 2a**, bei der das homogene Polymer (4) mit Partikeln (6) bedeckt ist. Die Partikel dürfen hierzu die Oberfläche nicht vollständig abdecken, d.h. es müssen zwischen Partikeln, seien es einzelne Partikel oder Partikelagglomerate, freie Zwischenräume existieren.

Bei den auf die Kunststoffoberfläche aufzubringenden Partikeln kann es sich um metallische, mineralische, keramische oder polymere Partikel handeln. Über Art und Dichte der Partikel auf der Oberfläche ist die Bedeckung der Oberfläche einstellbar. Bei Nanopartikeln oder auch bei porösen Partikeln kann bei feiner Verteilung auch eine Aufrauhung unter 1 µm erzielt werden. Ferner können Partikel verwendet werden, die durch die elektromagnetische Strahlung chemisch verändert werden. So können die Partikel beschädigt oder zersetzt werden. Zum einen ist dann ein Abtrag der Maske während der Strukturierung der Oberfläche möglich, zum anderen können die aufgetragenen Substanzen während der Bestrahlung mit der Kunststoffoberfläche reagieren, was zu einer zur Aufrauhung führenden Ätzwirkung führen kann.

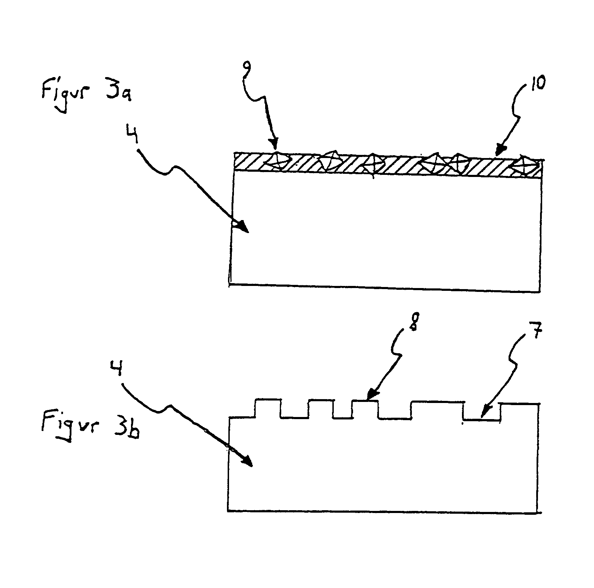

Im Sinne der vorliegenden Erfindung ist vorgesehen, die Partikel in gelöster Form auf die Oberfläche aufzubringen. Durch das Verdunsten des Lösungsmittels kristallisieren feine Partikel auf der Oberfläche aus, welche nachfolgend als Maske dienen können. In der Lösung befindet sich mindestens eine weitere Substanz, wobei diese die beaufschlagende elektromagnetische Strahlung im Vergleich zur Lösung unterschiedlich stark absorbiert. **Fig. 3a** zeigt die Bedeckung eines homogenen Polymers mit lichtundurchlässigen Kristallen (9), wobei sich zwischen den Kristallen eine weitere transparente Substanz (10) befindet. Das damit erzielte Bearbeitungsergebnis zeigt **Fig. 3b**, bei der die abgedeckten Stellen (8) stehen bleiben, während die transparent abgedeckten Bereiche (7) abgetragen sind. Durch das unterschiedliche Absorptionsverhalten der vorhandenen Substanzen kann vorteilhafterweise die Verteilung der Partikel gesteigert werden.

Diese weitere Substanz kann ebenfalls ein Lösungsmittel sein. Die zweite Substanz kann jedoch auch ein Netzmittel oder eine phasentrennende Substanz sein.

Bei der Beaufschlagung der Oberfläche mit elektromagnetischer Strahlung, muss pro Puls und Flächenelement eine Mindestenergie in der Oberfläche deponiert werden, um durch Brechen der entsprechenden chemischen Bindungen einen Materialabtrag zu realisieren. Erfolgt die Beaufschlagung der maskierten Oberfläche mit elektromagnetischer Strahlung, vorzugsweise mit gepulster Laserstrahlung, senkrecht zur Oberfläche, so werden die nicht oder transparent abgedeckten Teile der Oberfläche abgetragen, während die nichttransparent abgedeckten Teile stehen bleiben. Dieses Verfahren kann vorteilhafterweise bei der Aufrauhung von Polymeroberflächen eingesetzt werden. Das Bearbeitungsergebnis zeigt **Fig. 2b**, bei dem beim homogenen Polymer nach Belichtung und partiellem Abtrag Stellen (8) stehen bleiben, während die nicht abgedeckten Bereiche (7) abgetragen sind.

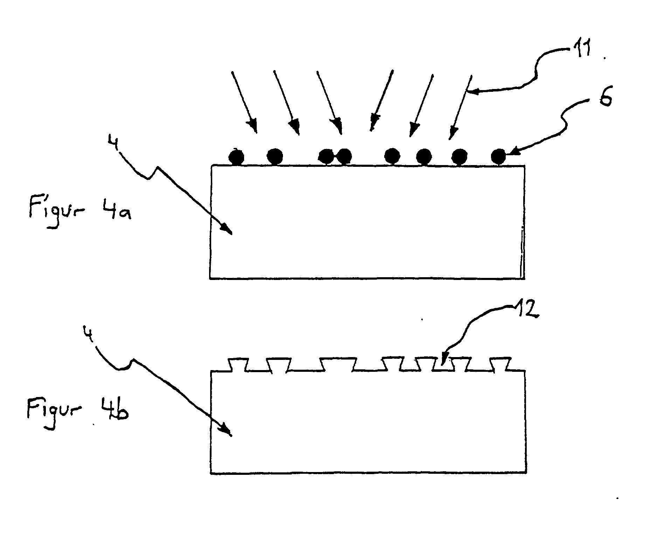

Erfolgt die Beaufschlagung hingegen schräg zur Oberfläche, so können Hinterschneidungen erzeugt werden. Hinterschneidungen sind auch möglich bei Bestrahlung der Oberfläche mit diffuser oder divergenter Strahlung, da in einem solchen Fall stets ein Teil der Strahlung Teile des Kunststoffs unterhalb der Maske belichtet. **Fig. 4a** zeigt die Belichtung mit schräg oder diffus einfallender elektromagnetischer Strahlung (11) des mit nicht strahlungsdurchlässigen Partikeln (6) bedeckten homogenen Polymers (4). Die entstehenden Hinterschneidungen (12) im homogenen Polymer (4) zeigt **Fig. 4b.**

Neben der Möglichkeit, auf direkte Weise durch thermische Effekte der beaufschlagenden elektromagnetischen Strahlung einen Materialabtrag und darüber eine Aufrauhung des Werkstoffes zu realisieren, lässt sich mit dem erfindungsgemäßen Verfahren auch auf indirekte Weise die Oberfläche aufrauhen. Dies geschieht dadurch, dass durch die Beaufschlagung der mit einer Maske aus Partikeln bedeckten Oberfläche Inhomogenitäten im Werkstoff geschaffen werden, die in einem zweiten Arbeitsgang mittels chemischer, physikalischer oder sonstiger Behandlung zur Aufrauhung ausgenutzt werden.

So können beispielsweise durch gepulste Laserstrahlung mit einer Pulsenergie unterhalb der Mindestenergie (Abtragschwelle) chemische oder physikalische Veränderungen hervorgerufen werden. Bei den physikalischen Änderungen sind insbesondere Änderungen der atomaren Struktur durch Umschmelzprozesse, Änderungen der stöchiometrischen Zusammensetzung durch Tempern, oder Änderungen des Werkstoffes hinsichtlich mechanischer Eigenschaften wie innerer Spannungen zu nennen. Mechanische Veränderungen im Nanobis Mikrometerbereich können vorteilhafterweise wirtschaftlich durch Beaufschlagung durch Infrarotstrahlung hervorgerufen werden. Chemische Veränderungen bedürfen meist größerer Quantenenergien und können beispielsweise durch Beaufschlagung mit elektromagnetischer Strahlung aus dem ultravioletten Spektralbereich (UV) realisiert werden. Durch die erfolgten chemischen oder physikalischen Veränderungen kommt es zu Inhomogenitäten des ursprünglich homogenen Werkstoffes, so dass dieser zum Beispiel empfindlicher bei chemischer Behandlung mit Säuren, Laugen oder Lösungsmitteln ist. Die belichteten Stellen können dadurch wie gewünscht abgetragen werden

Als Quelle für UV-Strahlung eignen sich neben gepulsten Lasern auch kontinuierlich betriebene Strahlungsquellen (Laser oder Lampen), da zum Auslösen photochemischer Reaktionen weniger der Spitzenstrahlungsfluss, als vielmehr die Wellenlänge und Dosis von Bedeutung sind. Als Quelle für Infrarotstrahlung werden vorteilhafterweise kontinuierlich emittierende Gas- oder Festkörperlaser, IR-Lampen oder, besonders vorteilhaft, Laserdioden, eingesetzt.

Durch schreibende Laserbehandlung oder durch Belichtung mittels einer zusätzlichen Belichtungsmaske ist eine ortsselektive Aufrauhung möglich, um zum Beispiel später Leiterbahnen auf die Kunststoffoberfläche aufzubringen.

Ohne Einschränkung des allgemeinen Erfindungsgedankens soll das erfindungsgemäße Verfahren an Ausführungsbeispielen erläutert werden.

Es_ wurden Partikel in gelöster Form auf eine PBT-Probe aufgebracht. Als Lösung wurden 80 ml Ethanol und 20 ml Natronlauge 5 molar gemischt. Zur Verbesserung der Benetzung wurden einige Tropfen handelsüblicher Tensidlösung zugegeben. Um abdeckende Partikel auskristallisieren zu können wurde 6 g Benzoesäure zugegeben, welche sich in der Lösung gleichmäßig verteilte. Die derart präparierte Lösung wurde mit einem Tuch dünn auf die Kunststoffoberfläche aufgetragen und trocknete sehr schnell, wobei sich eine gleichmäßige Verteilung kleiner Benzoesäurekristalle einstellte.

Die derart mit Benzoesäurekristallen bedeckte PBT-Probe wurde an Luft mit diffuser UV-Strahlung einer Excimer-Lampe 5 Minuten lang belichtet. Die Strahlung war dabei monochromatisch bei einer Wellenlänge von 222 nm. Anschließend wurde die Probe 2 Minuten in 70° C warmer, 5 molarer NaOH geätzt, wobei sich die nicht von Benzoesäurekristallen abgedeckten Bereiche auflösten. Die Maske wurde ebenfalls abgelöst.

## Patentansprüche

1. Verfahren zur Aufrauhung von Kunststoffoberflächen, bei dem auf die aufzurauhende Oberfläche Partikel derart aufgebracht werden, daß zwischen Partikeln freie Zwischenräume entstehen, daß die aufzurauhende Oberfläche in nicht von Partikeln abgedeckten Bereichen mit elektromagnetischer Strahlung beaufschlagt wird, und daß die Oberfläche in den mit elektromagnetischer Strahlung beaufschlagten Bereichen partiell abgetragen wird, **dadurch gekennzeichnet, daß** die Partikel in gelöster Form auf die Oberfläche aufgebracht werden, dass durch das Verdampfen des Lösungsmittels Partikel auf der Oberfläche auskristallisieren, und sich in der Lösung mindestens eine weitere Substanz befindet, wobei die beaufschlagende elektromagnetische Strahlung von dieser unterschiedlich stark absorbiert wird.

2. Verfahren nach Anspruch 1, **dadurch gekennzeichnet, daß** auf die Oberfläche für die elektromagnetische Strahlung undurchlässige Partikel aufgebracht werden.

3. Verfahren nach einem der Ansprüche 1 - 2, **dadurch gekennzeichnet, daß** metallische, mineralische, keramische oder polymere Partikel auf die Oberfläche aufgebracht werden.

4. Verfahren nach einem der Ansprüche 1 - 3, **dadurch gekennzeichnet, daß** die Kunststoffoberfläche nicht senkrecht zur Oberfläche mit elektromagnetischer Strahlung beaufschlagt wird.

5. Verfahren nach einem der Ansprüche 1 - 4, **dadurch gekennzeichnet, daß** die beaufschlagende elektromagnetische Strahlung Ultraviolettstrahlung ist.

6. Verfahren nach einem der Ansprüche 1 - 5, **dadurch gekennzeichnet, daß** die beaufschlagende elektromagnetische Strahlung Laserstrahlung ist.

7. Verfahren nach einem der Ansprüche 1 - 6, **dadurch gekennzeichnet, daß** die nicht von Partikeln abgedeckten Bereiche der Oberfläche durch die elektromagnetische Strahlung eine chemische Veränderung erfahren, so daß in den chemisch veränderten Oberflächenbereichen durch einen Ätzprozess eine Abtragung erfolgen kann.

8. Verfahren nach Anspruch 7, **dadurch gekennzeichnet, daß** die nicht abgedeckten Teile der Oberfläche durch direkte Einwirkung mit Laserstrahlung oberhalb einer Schwellenergiedichte abgetragen werden.

9. Verfahren nach einem der Ansprüche 1 - 8, **dadurch gekennzeichnet, daß** die Beaufschlagung mit elektromagnetischer Strahlung nur in einzelnen Bereichen der unvollständig mit Partikeln abgedeckten Oberfläche erfolgt.

10. Verfahren nach Anspruch 9, **dadurch gekennzeichnet, daß** die Beaufschlagung mit elektromagnetischer Strahlung unter Verwendung einer weiteren Belichtungsmaske oder durch schreibende Laserbeaufschlagung erfolgt.

## Claims

1. Method for roughening plastic surfaces, in which particles are applied to the surface to be roughened in such a manner that free spaces are formed between particles, that the surface to be roughened is acted on by electromagnetic radiation in regions which are not covered by particles, and that the surface is partially removed in the regions which are acted on by electromagnetic radiation, **characterized in that** the particles are applied to the surface in dissolved form, **in that** particles crystallize on the surface as a result of the evaporation of the solvent, and the solution contains at least one further substance, the electromagnetic radiation which is to be applied being absorbed to a different extent by this further substance.

2. Method according to Claim 1, **characterized in that** particles which are impervious to the electromagnetic radiation are applied to the surface.

3. Method according to one of Claims 1 - 2, **characterized in that** metallic, mineral, ceramic or polymeric particles are applied to the surface.

4. Method according to one of Claims 1 - 3, **characterized in that** the plastic surface is not acted on by electromagnetic radiation perpendicular to the surface.

5. Method according to one of Claims 1 - 4, **characterized in that** the electromagnetic radiation to be applied is ultraviolet radiation.

6. Method according to one of Claims 1 - 5, **characterized in that** the electromagnetic radiation to be applied is laser radiation.

7. Method according to one of Claims 1 - 6, **characterized in that** those regions of the surface which are not covered by particles undergo a chemical change as a result of the electromagnetic radiation, so that material can be removed by means of an etching process in the chemically changed surface regions.

8. Method according to Claim 7, **characterized in that** the uncovered parts of the surface are removed by direct action of laser radiation above a threshold energy density.

9. Method according to one of Claims 1 - 8, **characterized in that** the application of electromagnetic radiation takes place only in individual regions of the surface which is incompletely covered with particles.

10. Method according to Claim 9, **characterized in that** the application of electromagnetic radiation takes place using a further exposure mask or by application of a writing laser.

## Revendications

1. Procédé pour rendre rugueuses des surfaces de matière plastique, selon lequel sur les surfaces à rendre rugueuses on applique des particules de façon telle qu'entre les particules il subsiste des espaces intermédiaires libres, dans les zones non recouvertes par des particules les surfaces à rendre rugueuses sont soumises à un rayonnement électromagnétique, et dans les zones soumises au rayonnement électromagnétique, les surfaces sont partiellement décapées,
**caractérisé en ce que**
les particules sont appliquées sous forme dissoute sur les surfaces, les particules cristallisent sur les surfaces par évaporation du solvant, et dans la solution se trouve au moins une autre substance qui absorbe le rayonnement électromagnétique incident qui absorbe différemment.

2. Procédé selon la revendication 1,
**caractérisé en ce qu'**
on applique sur les surfaces des particules opaques au rayonnement électromagnétique.

3. Procédé selon l'une des revendications 1 à 2,
**caractérisé en ce que**
on applique des particules métalliques, minérales, céramiques ou polymères sur les surfaces.

4. Procédé selon l'une des revendications 1 à 3,
**caractérisé en ce que**
le rayonnement électromagnétique attaque les surfaces de matière plastique non perpendiculairement à la surface.

5. Procédé selon l'une des revendications 1 à 4,
**caractérisé en ce que**
le rayonnement électromagnétique incident est un rayonnement ultraviolet.

6. Procédé selon l'une des revendications 1 à 5,
**caractérisé en ce que**
le rayonnement électromagnétique incident est un rayonnement laser.

7. Procédé selon l'une des revendications 1 à 6,
**caractérisé en ce que**
les zones de la surface qui ne sont pas recouvertes par des particules subissent à cause du rayonnement électromagnétique, une modification chimique de sorte que dans les zones de surfaces chimiquement modifiées une mise à nu par un processus de corrosion puisse s'effectuer.

8. Procédé selon la revendication 7,
**caractérisé en ce que**
les parties de la surface qui ne sont pas recouvertes soient mises à nu par action directe avec le rayonnement laser au-dessus d'une intensité de flux d'énergie de seuil.

9. Procédé selon l'une des revendications 1 à 8,
**caractérisé en ce que**
l'incidence du rayonnement électromagnétique ne s'effectue que dans les domaines particuliers des surfaces qui ne sont pas recouvertes complètement par des particules.

10. Procédé selon la revendication 9,
**caractérisé en ce que**
l'incidence du rayonnement électromagnétique s'effectue en utilisant un autre masque d'illumination ou par une écriture de charge laser.
